# EUROPEAN PATENT APPLICATION

(11) **EP 3 344 014 A1**
(43) Date of publication of application: **04.07.2018**
(21) Application number: 17382916.9
(22) Date of filing: 28.12.2017
(51) Int. Cl.: H05B 33/08, B60Q 1/00

(54) **ILLUMINATION DEVICE FOR A VEHICLE AND ASSOCIATED PROCEDURE FOR CONTROLLING SAID ILLUMINATION**

(30) Priority: 30.12.2016 ES 201631719
(71) Applicant: Seat, S.A., 08760 Martorell (ES)
(72) Inventor: PAREDES DOMINGUEZ, MAGNOLIA, 08760 BARCELONA (ES); RAMIREZ MORON, VICTOR MANUEL, 08760 BARCELONA (ES); DIAZ MARTÍN, ADÁN, 08760 BARCELONA (ES); VICENS OVIEDO, MIGUEL ANGEL, 08760 BARCELONA (ES)
(74) Representative: Isern Patentes y Marcas S.L.

(57) **Abstract**

Illumination device for a vehicle, wherein the illumination device comprises a variable power source (5), a plurality of illumination means (2), wherein the plurality of illumination means (2) are disposed in series, and wherein the plurality of illumination means (2) are disposed upon terminals (6) of the variable source of voltage (5), wherein each of the means of illumination (2) has associated respectively a resistive means (3) disposed in parallel such that each means of illumination (2) is illuminated as a function of the value of the associated resistive means (3). Associated procedure to control an illumination modifying a voltage supplied, such that each means of illumination (2) modifies the respective state of illumination thereof. In this manner there is obtained a gradual and progressive turning on of the means of illumination.

## Description

### OBJECT OF THE INVENTION

The present patent application has as object an illumination device for a vehicle according to claim 1, incorporating notable innovations and advantages, and an associated procedure for controlling said illumination according to claim 13, also incorporating notable innovations and advantages.

### BACKGROUND OF THE INVENTION

There is currently a requirement in the automobile sector to achieve visual effects with the lights of the headlamps, in particular that of a gradual turning on of the points of light, generally by means of LED diodes. In this respect solutions are known wherein said effects are achieved by means of the use of microcontrollers.

Specifically, there is known from the state of the art, as reflected in the document US20160031365, a system to control a directional indicator of a vehicle including a plurality of lamps turned on at different voltage thresholds and indicating a direction of turn of the vehicle. A controller is configured to change an input voltage supplied to the lamps such as to produce the turning on and/or turning off thereof sequentially.

The objective thereof is to reduce the number of components, and consequently the price, when realising a sequential turning on and turning off of the indicator. Nevertheless, employing microcontrollers, each light emitter must be connected to a pin of the microcontroller, wherein the microcontroller is configured to change the input voltage to the light emitters in ramp form.

The difficulty associated with the concept of said document US20160031365 is, in the first place, that of requiring a controller to generate the variable voltage, being an expensive solution. In the second place, the currents are different for all the light emitters or LEDs, consequently the luminosity is not homogenous. In the third place, the visual effect derived from the concept of said document is that all the light emitters or LEDs commence at a low current value, however as the value of the voltage increases, the light emitters or LEDs having a lower associated resistance also increase the current thereof, together with the luminosity thereof, and this is not the effect desired. It must be taken into account that, in this circuit, the resistance is placed in series to the light emitter or LED. In the fourth place, the plurality of light emitters or LEDs have different voltage thresholds, consequently each light emitter or LED requires differ from the remainder, representing a complication in logistics and assembly terms. For example, if it is desired to obtain a sequence of 10 light emitters or LEDs, 10 different light emitters or LEDs installed in sequence would be required, increasing the possibility of errors in the installation, etc ... Additionally, the resistances maintain a luminous intensity uniform in the light emitters or LEDs. As a consequence, resistances having different values would also be necessary, this increasing the problem of the complexity and an increase in possible errors in installation.

There is also known from the state of the art, as reflected in the document EP2763505, a light emitter module including a plurality of packets of light emitters connected to one another in series and configured for the turning on thereof in a sequential manner according to the level of voltage of the external unit. Each of the plurality of packets of light emitter devices includes a light emitter packet having at least one light emitter device. The concept divulged in said document presents a controller configured to control as relevant the turning on or turning off of the light emitting cell. The difficulty associated with the concept of said document EP2763505 is also that of being an expensive and complex concept wherein each light emitter packet comprises a controller, at least one resistor, at least one comparator ...

As a consequence, it may be observed that there still exists a requirement for an illumination device for a vehicle and associated procedure for controlling said illumination such as to permit achieving visual effects, in particular that of a gradual turning on and turning off of the points of light, by means of a simpler and cheaper design, minimising errors of installation and the complexity thereof.

### DESCRIPTION OF THE INVENTION

The present invention consists of an illumination device for a vehicle and associated procedure for controlling said illumination permitting obtaining an aesthetic effect according to a dynamic and sequential turning on and turning off of a plurality of light emitters or LED diodes.

The principal characteristics around which the present invention is focused are the following:
- Feed: variable supply of voltage (that is to say, not constant),
- Operation: production of a delay in the turning on and/or turning off of the light emitters or LED diodes. The delay is achieved by means of a resistance in parallel in respect of the light emitter or LED diode. In order to achieve the desired dynamic and sequential effect, the resistances are positioned according to a sequenced value.

It is pointed out that both the feed or supply of variable voltage and the disposition of the electronic components, according to the present invention, permit creating the desired effect of dynamism. In the absence of one of the two, the effect would be that of all the light emitters or LEDs being turned on or turned off simultaneously.

Consequently, and more specifically, the invention consists of an illumination device for a vehicle, wherein the illumination device comprises a variable power source, a plurality of illumination means, wherein the plurality of illumination means are disposed in series, and wherein the plurality of illumination means are disposed upon terminals of the variable source of voltage, wherein each of the means of illumination has associated respectively a resistive means disposed in parallel, such that each means of illumination is illuminated as a function of the value of the associated resistive means.

The means of illumination are, in a preferred embodiment, LED diodes, having a resistance in parallel to each LED diode such that the LED diodes will experience delay in the turning on and turning off thereof by virtue of the difference in consumption produced by the resistance. The resistance consequently plays the part of removing current or current intensity from the means of illumination disposed in series with said resistance. As a consequence, the smaller the value of the resistance, the later the turning on will occur in comparison with the remaining rows on absorbing a greater current or current intensity. And for the turning off, the lower the resistance, the quicker the turning off will occur.

By variable power source is understood a non-constant power source. In this manner, any progressive variation in the voltage supplied serves to realise the effect sought.

Consequently, going into greater detail in regard to the basis permitting creating the effect cited, the present invention is based upon the fact that the consumption of current by the LED diodes does not behave in the same manner as the consumption of a fixed resistance when a variable supply is applied. For this reason it may be observed how the LED diodes having an added resistance in parallel will delay the turning on and/or turning off thereof by virtue of this difference in consumption. It is consequently highlighted that the plurality of illumination means comprises an associated value of the threshold, knee or starting voltage, wherein the associated threshold value is on the basis of the resistive means disposed in parallel.

Knowing the behaviour of the resistance in respect of the variable supply, and knowing the behaviour of the means of illumination in respect of the variable supply, it is possible to control the delay in the turning on and/or turning off of the LED diodes. If a resistance is utilised in parallel with each means of illumination and the values of these resistances are sequenced, an effect of progressive turning on and turning off of the plurality of illumination means is achieved.

Having the objective of determining the values of resistances, the highest value must be employed for the LED diodes turned on first, decreasing the value of resistance for those LED diodes turned on progressively. Should it be desired to reverse the sense of the sequence, it is only necessary to reverse the value of the resistances disposed in parallel and associated to each of the means of illumination.

More specifically, each means of illumination comprises a single LED diode, such that the invention benefits from the advantages in terms of reliability and savings in consumption of these devices. In this manner the creation is obtained of the effect of dynamic turning on with a first LED diode and a second LED diode disposed in series and upon terminals of the variable source of voltage, and wherein the first LED diode comprises a first resistive means disposed in parallel and wherein the second LED diode comprises a second resistive means disposed in parallel. As a function of the values of the first resistive means and of the second resistive means there will be obtained a sequenced turning on/turning off of the first and second LED diodes. It is emphasised that there may exist the number of LED diodes as may be desired, there having been set out merely an example for a first and a second LED diode.

In a preferred embodiment of the invention, each LED diode of each means of illumination comprises some characteristics identical to the LED diode of the plurality of illumination means. In this manner there is produced a simplification of logistics and of design of the connection diagram, by virtue of the fact that all the LED diodes present some characteristics identical to one another. In this manner all the LED diodes will dispose of the same power, optoelectrical characteristics, threshold voltage ...

According to another aspect of the invention, each means of illumination comprises a plurality of LED diodes, wherein the plurality of LED diodes are disposed in parallel. In this alternative embodiment, each resistive means is associated to a plurality of LED diodes, the plurality of LED diodes being disposed in parallel. In this manner, the effect of delaying or advancing the turning on/turning off in respect of the remaining means of illumination occurs simultaneously for the plurality of LED diodes disposed in parallel.

A second example wherein the plurality of LED diodes are disposed in parallel is in a array disposition. In this manner, the plurality of illumination means are disposed in a array. The array is defined according to a first dimension in series to the terminals of the variable source of voltage, in this manner forming different rows of the array, and a second dimension in parallel to the terminals of the variable source of voltage, in this manner forming different columns of the array, the minimum structure being a array of 2 rows x 2 columns. In this manner, the concept of the invention benefits from the advantages of a array configuration, according whereto, in the event of the failure of one of the LED diodes, the current is distributed among the remaining LED diodes and the illumination device continues to function. In this manner a generalised failure of the illumination device does not occur. This point is particularly beneficial in the application thereof in the automotive sector, wherein a failure in the lighting system of the vehicle is of particular relevance.

In greater detail, in a array of identical LED diodes and having a fixed supply (in terms of example, a direct current supply), the current is distributed in an uniform manner and has the same value for each of the LED diodes such that they turn on and turn off in a simultaneous manner upon applying a supply voltage. This is a situation of a balanced array. In the case wherein a diode is substituted by a resistance consuming the same value as the remainder of the LED diodes for a constant voltage, a balanced array continues to be obtained. Having the objective of destabilising the array there is disposed a resistance having different values in each row of the array. By means of this destabilisation and the variable supply the effects of dynamism in the turning on and/or turning off of the aforesaid LED diodes is obtained.

In an alternative array type configuration there is additionally implemented a resistance in series to each LED diode. Said resistance limits the current circulating through each LED diode. It is implemented having the objective that, should a LED diode fail, the remainder of the plurality of LED diodes of the array are not overloaded. In this manner, the reason for the implementation thereof is to achieve a protection of the plurality of LED diodes: the resistance in series to each LED diode limits the current and prevents their being damaged and failing prior to the normal working life extent.

Advantageously, the plurality of LED diodes of each means of illumination comprise some characteristics identical to one another. In this manner there is produced a simplification of logistics and design. Additionally, all the LED diodes emit light having a same intensity, bringing therewith a progressive sequential turning on without abrupt changes of luminescence.

Additionally, the plurality of LED diodes of each means of illumination comprise some characteristics identical to the plurality of LED diodes of the plurality of illumination means, there being derived the aforementioned advantages of simplification of logistics and of design and of progressive sequential turning on.

According to another aspect of the invention, each resistive means is a fixed resistance. By fixed resistance is understood a resistance presenting an unmodifiable ohmic value. In this manner there is produced a simplification of design, and a saving in said component in respect of others, such as variable resistances.

Advantageously, each fixed resistance comprises a value wherein the value of each fixed resistance differs from to one another such as to bring about a staged turning on and/or turning off of each associated LED diode. It must be noted that said difference in value must be of a value of a sufficient magnitude. Otherwise, should the resistances of each row have a very similar value to one another, the turning on or turning off will occur in a very short interval of time such that the user will practically not perceive the effect.

Preferentially, the value of each fixed resistance is ordered in a sequenced manner such that the value of each associated fixed resistance in parallel to each means of illumination is ordered from higher to lower or from lower to higher. In this manner the turning on or turning off of the successive LED diodes occurs in a sequential manner. It is specified that the term ordered refers to the physical disposition of the elements, in this case resistances, across the array. Consequently, the value of each fixed resistance differs for each row of the array, the value of each resistance being ordered according to the ascending or descending distribution of the rows of the array.

In a particular embodiment, the value of each fixed resistance is ordered according to a same difference in percentage of the value thereof, such that the advance of the turning on or turning off of the successive LED diodes occurs in a staged manner, following a same pace of turning on or turning off between the successive LED diodes.

According to another aspect of the invention, each resistive means is a variable resistance. By variable resistance it is understood that it presents a modifiable ohmic value. Consequently, it is possible to realise different patterns of turning on or turning off according to the requirements at every moment during the driving. Specifically, the system could modify the speeds of turning on and/or turning off according to the value of a braking. In this manner, a dynamic effect will be produced each time that the brake pedal of the vehicle is pressed. By virtue of the use of a resistance of variable value the effect could be obtained that, the greater the intensity of braking, the filling or speed of turning on of the plurality of LED diodes would be faster. In a contrary manner, on presenting a lesser intensity of braking, the filling or speed of progressive turning on of the plurality of LED diodes would be slower. This effect would be produced solely through varying the value of the resistances.

Additionally, the variable power source comprises a source of direct current supply and at least one condenser, wherein the at least one condenser is disposed in series in respect of the source of direct current supply.

By means of this configuration a progressive supply of the voltage is obtained, in this manner obtaining both a sequential turning on and a sequential turning off of the LED diodes, representing an economic possibility of a design to produce a progressive increase and/or decrease of voltage. Having a source of direct current supply and at least one condenser in series there is achieved a single turning off and/or turning on. Through realising a plurality of turnings off and/or turnings on of the source of direct current supply the effect of multiple stages would be obtained, producing a plurality of dynamic turnings on and/or turnings off of the plurality of illumination means. It is noted that when the supply attains a sufficient value (in the case of a condenser, 2/3 of the ramp for example), all the LED diodes come to have the same current, obtaining a great homogeneity of illumination.

According to another embodiment of the invention, the variable power source comprises a pulsing power source and at least one condenser, wherein the at least one condenser is disposed in series in respect of the pulsing power source. In this manner it is possible to complete a sequence of progressive turnings on without having to constantly turn on and turn off the direct current power source.

The invention also includes the disposition of a vehicle headlamp comprising an illumination device according to that aforementioned, benefiting from the aforedescribed advantages.

A further object of the present invention is a procedure to control an illumination of an illumination device for a vehicle according to that aforedescribed, wherein the procedure comprises the stages of receiving an instruction to modify a state of illumination of the plurality of illumination means, and the stage of modifying a voltage supplied by the variable power source, such that each means of illumination modifies the respective state of illumination thereof as a function of the value of the associated resistive means. In this manner an effect of gradual and sequenced illumination of the means of illumination is obtained.

This gradual and sequenced effect may be utilised for a dynamic turning on/turning off of the indicators, a dynamic turning on/turning off of the daytime running lights, a sequenced turning off of a braking illumination ...

Advantageously, the stage of modifying the voltage supplied by the variable power source comprises supplying a progressive increase in voltage between the terminals of the variable power source, such that each means of illumination is turned on as a function of the value of the associated resistive means. In this manner there is obtained an effect of gradual and sequenced illumination of the means of illumination.

Moreover, the stage of modifying the voltage supplied by the variable power source comprises supplying a progressive decrease in voltage between the terminals of the variable power source, such that each means of illumination is turned off as a function of the value of the associated resistive means. In this manner there is obtained an effect of gradual and sequenced withdrawal of the illumination of the means of illumination.

A computer program is also an object of the present invention, comprising instructions such that, when said program is executed by a computer, it executes the procedure to control an illumination according to the stages of the aforedescribed procedure.

In terms of a non-limitative example, in the attached drawings there is shown an illumination device for a vehicle and associated procedure to control said illumination, constituted according to the invention. Other characteristics and advantages of said illumination device for a vehicle and associated procedure to control said illumination, object of the present invention, will be evident based upon the description of a preferred, however not exclusive, embodiment, illustrated in terms of a non-limitative example in the attached drawings, in which:

### BRIEF DESCRIPTION OF THE DRAWINGS

Figure 1 is a view of the minimum circuit for the illumination device according to the present invention.
Figure 2 is a view of the circuit for the illumination device wherein each means of illumination comprises two light emitters disposed in parallel, according to the present invention.
Figure 3 is a view of the circuit for the illumination device according to a 3 x 3 array according to the present invention.
Figure 4A is a view of the circuit for the illumination device according to a 3 x 6 array, including a signal of variable voltage, showing the gradual turning on of the LED diodes according to a first phase of illumination, according to the present invention.
Figure 4B is a view of the circuit for the illumination device according to a 3 x 6 array, including a signal of variable voltage, showing the gradual turning on of the LED diodes according to a second phase of greater illumination than the preceding one, according to the present invention.
Figure 4C is a view of the circuit for the illumination device according to a 3 x 6 array, including a signal of variable voltage, showing the gradual turning on of the LED diodes according to a third phase of greater illumination than the preceding one, according to the present invention.
Figure 4D is a view of the circuit for the illumination device according to a 3 x 6 array, including a signal of variable voltage, showing the complete turning on of the LED diodes according to a fourth phase of illumination, according to the present invention.
Figure 4E is a view of the circuit for the illumination device according to a 3 x 6 array, including a signal of variable voltage, showing the complete turning off of the LED diodes in a fifth phase, according to the present invention.
Figure 5 is a view of a cycle of a signal of variable supply, according to the present invention.
Figure 6A is a view of the supply circuit of variable voltage, according to a basic RC circuit having 1 charge, according to the present invention.
Figure 6B is a view of the circuit of supply of variable voltage, according to a basic RC circuit having cyclic charging and discharging, according to the present invention.
Figure 6C is a view of the supply circuit of variable voltage, according to an oscillator circuit based upon a 555 timer and RC control, according to the present invention.
Figure 6D is a view of the supply circuit of variable voltage, according to a generator circuit having a sawtooth and amplifying stage with transistor, according to the present invention.

### DESCRIPTION OF A PREFERRED EMBODIMENT

In relation to the aforementioned figures, and in conformity with the numbering adopted, there may be observed therein an example of preferential embodiment of the invention comprising the parts and elements referred to and described in detail below.

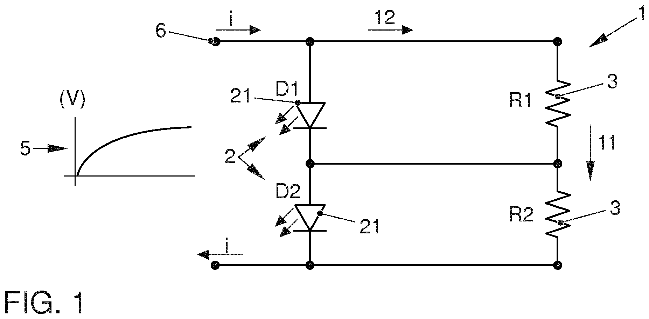

In figure 1 there may be observed, according to a minimum embodiment, a variable power source 5, wherein two LED diodes 21 are disposed in series and upon terminals 6 of the variable power source 5. Each LED diode 21 has respectively associated a resistive means 3, wherein the resistive means 3 is disposed in parallel to each LED diode 21. The visual effect produced by the illumination device according to said representation and according to the variable supply in the form of progressive increase in the voltage shown is:
- In a first instant, the two LED diodes 21 are turned off.
- In a second instant, a first LED diode 21 is turned on, whilst a second LED diode 21 remains turned off.
- In a third instant, the second LED diode 21 is turned on whilst the first LED diode 21 remains turned on.

It is remarked that the LED diodes 21 present some characteristics identical to one another, in addition to the fact that each resistive means 3 is a fixed resistance 31 and wherein the value of the first fixed resistance 31 disposed in parallel to the first LED diode 21 is of a value exceeding the value of the second fixed resistance 31 disposed in parallel to the second LED diode 21.

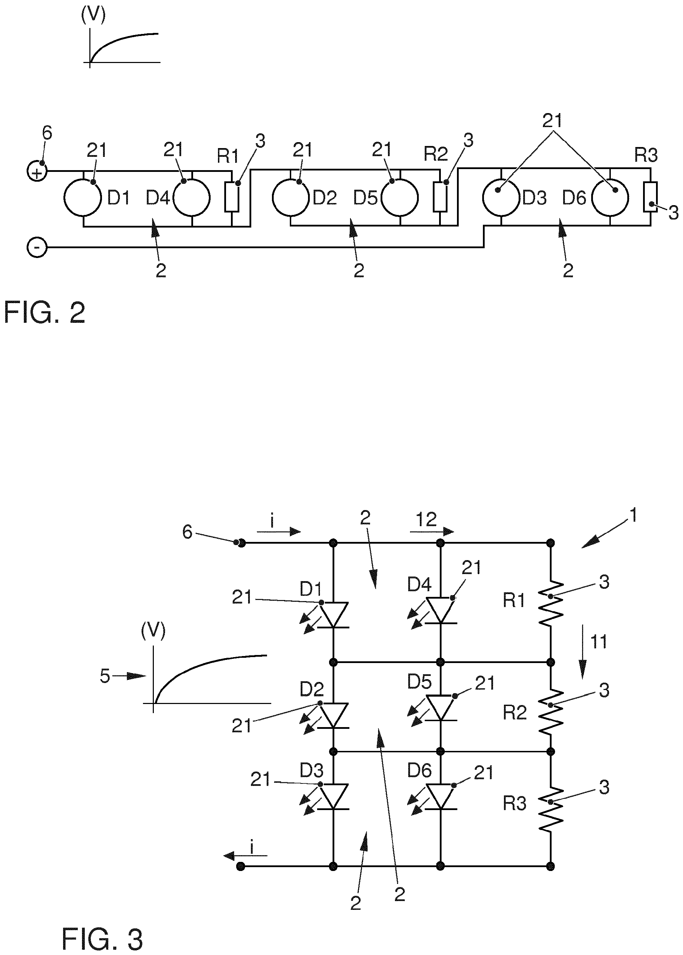

In figure 2 there may be observed a developed embodiment of the preceding one, wherein there is a plurality of illumination means 2. Specifically, there are three means of illumination 2 disposed in series and upon terminals 6 of the variable source of voltage 5. Each means of illumination 2 comprises two LED diodes 21 disposed in parallel. In this manner, there are six LED diodes 21. The visual effect produced by the illumination device according to said representation and according to the variable supply in the form of a progressive increase in the voltage shown is:
- In a first instant the 6 LED diodes 21 are turned off.
- In a second instant, the LED diodes 21 shown as D3 and D6 are turned on, whilst the LED diodes 21 shown as D1, D2, D4 and D5 remain turned off.
- In a third instant, the LED diodes 21 shown as D2 and D5 are turned on, whilst the LED diodes 21 shown as D3 and D6 remain turned on and whilst the LED diodes 21 shown as D1 and D4 remain turned off.
- In a fourth instant, the LED diodes 21 shown as D1 and D4 are turned on, whilst the LED diodes 21 shown as D2, D5, D3 and D6 remain turned on.

It is remarked that the LED diodes 21 present some characteristics identical to one another, in addition that each resistive means 3 is a fixed resistance 31 and wherein the value of the fixed resistance R3 comprises a value exceeding the fixed resistances shown as R2 and R1. In addition, the value of the fixed resistance R2 in turn comprises a value exceeding the fixed resistance R1.

In figure 3 there may be observed a representation equivalent to the preceding one, however wherein the LED diodes 21 are disposed in a structure in array form, specifically a 3 x 2 array. In this manner there are shown six LED diodes 21 in series, located two by two in parallel to one another and in parallel to a resistive means 3. The superior and inferior extremities are connected to the terminals 6 of a variable power source 5.

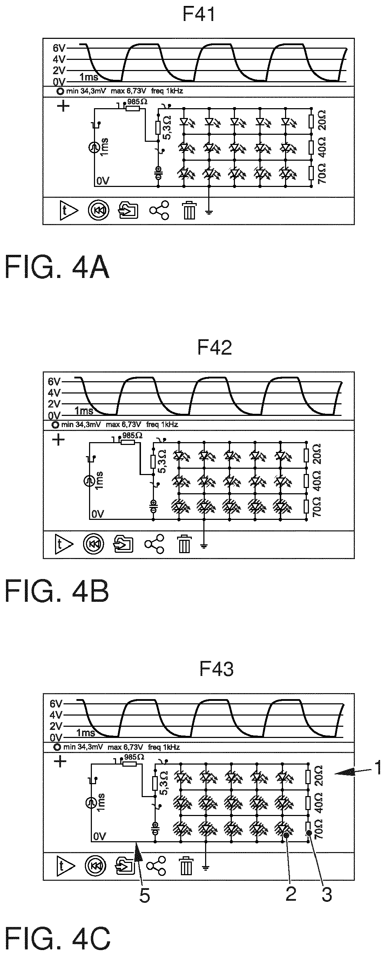

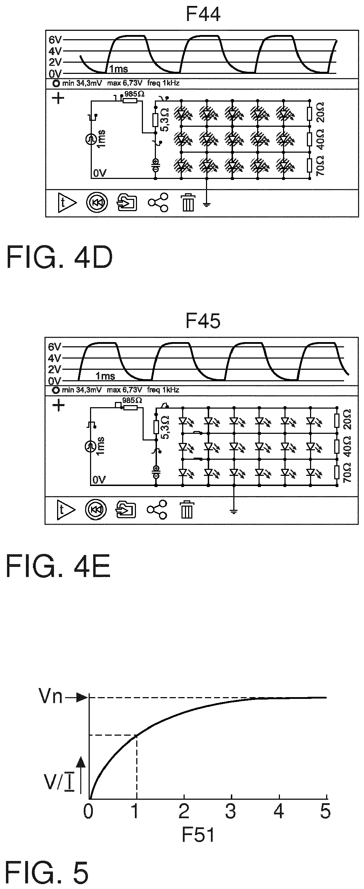

In figures 4A to 4E there are shown fifteen LED diodes disposed in a 3 x 5 array, having five LED diodes 21 in parallel to each resistive means 3, there being three arms or rows of five LED diodes 21 in each. In the consecutive figures there may be observed the different phases of progressive turning on of the consecutive rows of LED diodes 21, until arriving once more at a turned off state in figure 4E. Said sequenced turning on of the plurality of LED diodes 21 is according to a variable power source 5 as shown, wherein the variable power source 5 comprises a pulsing power source and at least one condenser 4, wherein the at least one condenser 4 is disposed in series in relation to the pulsing power source.

In figure 5 there may be observed the standard curve of the voltage produced by a variable power source 5, wherein the variable power source 5 comprises a direct current power source and at least one condenser 4, wherein the at least one condenser 4 is disposed in series in relation to the direct current power source. This example of supply is utilised in figures 1 to 3. It is recalled that the same disposition of electronic components equally generates a dynamic effect of turning off when a progressive decrease in voltage is obtained.

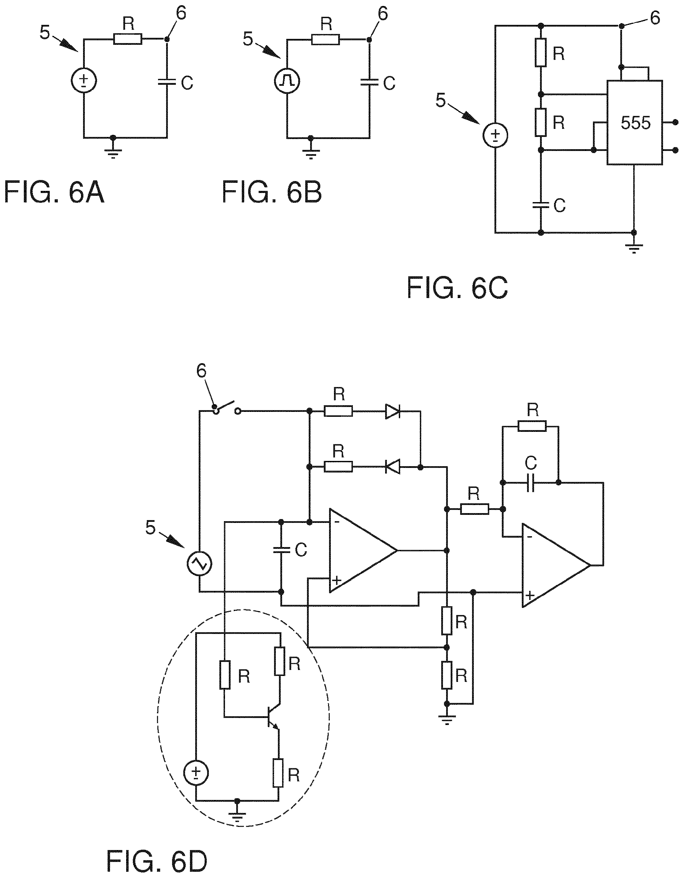

In figures 6A to 6D there are shown diverse configurations of supply circuits of variable voltage, equally valid for the generation of a progressive increase in the voltage at terminals 6 of the variable power source 5 or for the generation of a progressive decrease in the voltage at terminals 6 of the variable power source 5, in figure 6A according to a basic RC circuit with 1 charge, in figure 6B according to a basic RC circuit with cyclic charging and discharging, in figure 6C according to an oscillator circuit based upon a 555 timer and RC control, and in figure 6D according to a generator circuit having a sawtooth and amplifying stage with transistor.

In this manner, as may be observed in figures 1, 3, 4A, 4B, 4C, 4D and 4E, the present invention consists of an illumination device for a vehicle, wherein the illumination device comprises a variable power source 5, a plurality of illumination means 2, wherein the plurality of illumination means 2 are disposed in series, and wherein the plurality of illumination means 2 are disposed upon terminals 6 of the variable source of voltage 5, wherein each of the means of illumination 2 has associated respectively a resistive means 3 disposed in parallel, such that each means of illumination 2 is illuminated as a function of the value of the associated resistive means 3.

More specifically, as may be observed in figure 1, means of illumination 2 comprises a single LED diode 21. In this manner there is defined as minimum unit of the means of illumination 2 a single light emitter, such as for example a LED diode 21. Alternatively, a generic means of illumination 2 may embrace other light emitters, or sources of illumination, of different technologies other than a LED diode 21, capable for example of being supplied with DC current.

Additionally, as may be observed in figure 1, the LED diode 21 of each means of illumination 2 comprises some characteristics identical to the LED diode 21 of the plurality of illumination means 2. Said identical characteristics may be, in a non-limitative manner, the power and optoelectrical characteristics.

According to another aspect of the invention, as may be observed in figure 2, each means of illumination 2 comprises a plurality of LED diodes 21, wherein the plurality of LED diodes 21 are disposed in parallel. In this manner, in a preferential embodiment, the minimum unit of illumination is two means of illumination 2 in series, wherein each means of illumination 2 comprises two LED diodes 21 in parallel and having the respective resistive means 3 thereof in parallel. In this manner there is produced a sequential turning on or turning off of the two means of illumination 2 as a function of the value of the resistive means 3 associated with each means of illumination 2. In terms of example, a means of illumination 2 may be two LED diodes 21 in parallel, as shown in the new figure 2. Said embodiment, wherein the means of illumination 2 is two LED diodes 21 in parallel, would be a first development of the minimum unit of a 2 x 2 array.

It should be mentioned that, as may be observed in figures 1, 3, 4A, 4B, 4C, 4D and 4E, the plurality of LED diodes 21 of each means of illumination 2 comprises some characteristics identical to the plurality of LED diodes 21 of the plurality of illumination means 2. Consequently, not solely those of each arm, but all the LED diodes 21 of the array or matrix are identical to one another.

According to another aspect of the invention, as may be observed in figures 1, 2, 3, 4A, 4B, 4C, 4D and 4E, each resistive means 3 is a fixed resistance 31.

More particularly, as may be observed in figures 1, 2, 3, 4A, 4B, 4C, 4D and 4E, each fixed resistance 31 comprises a value, wherein the value of each fixed resistance 31 differs from one to another.

According to a preferential embodiment of the invention, as may be observed in figures 4A, 4B, 4C, 4D and 4E, the value of each fixed resistance 31 is ordered in a sequenced manner, such that the value of each associated fixed resistance 31 in parallel to each means of illumination 2 is ordered from higher to lower or from lower to higher. In terms of an example shown in figures 4A to 4E, the value of each fixed resistance 31 has been ordered from lower to higher. In this manner, the value of the fixed resistance 31 located in the inferior row is 70 Ω, there being produced in this manner, and in the first place, the turning on of the LED diodes 21 disposed in parallel to said fixed resistance. In addition, the value of the fixed resistance 31 located in the central row is 40 Ω, there being produced in this manner, and in second place, the turning on of the LED diodes 21 disposed in parallel to said fixed resistance. Furthermore, the value of the fixed resistance 31 located in the superior row is 20 Ω, there being produced in this manner, and in third place, the turning on of the LED diodes 21 disposed in parallel to said fixed resistance. More specifically, the value of each fixed resistance is comprised in a range of 10 - 40 % of the value of the highest thereof.

According to another aspect of the invention, as derived as an alternative from the figures in relation to the text of the present specification, each resistive means 3 is a variable resistance.

It should be mentioned that, as may be observed in figure 6A, the variable power source 5 comprises a direct current power source and at least one condenser 4, wherein the at least one condenser 4 is disposed in series in respect of the direct current power source. In this manner there is produced a progressive increase in the supply voltage, as shown diagrammatically in figure 5. This example could be utilised in an indicator of an automobile vehicle, wherein when the user activates an actuator of the indicator, the direct current power source is fed. By virtue of the condenser 4 there is produced a progressive supply of the voltage, producing in this manner the sequential turning on of the LED diodes 21, as has been set out above. Through the activation multiple times of the actuator of the indicator, multiple progressive turnings on are obtained of the means of illumination 2.

Moreover, as may be observed in figure 6B, the variable power source 5 comprises a pulsing power source and at least one condenser 4, wherein the at least one condenser 4 is disposed in series in respect of the pulsing power source. This alternative would correspond to a basic cyclic charge and discharge RC circuit, being the most economical alternative wherein the variable source of voltage 5 attains in the charge cycles a nominal value Vn, and wherein the value of the resistance or resistive means 3 is such that the plurality of LED diodes 21 are fed at a same current value and at a voltage of 2/3 of the nominal value Vn. By means of this there is obtained great homogeneity in the illumination.

In another embodiment, as may be observed in figure 6C, the variable source of voltage 5 comprises a direct current power source and a 555 timer based upon an RC charge and discharge circuit of the condenser 4.

In a yet another embodiment, as may be observed in figure 6D, the variable source of voltage 5 comprises an operational amplifier, wherein the operational amplifier is in a sawtooth configuration and wherein the operational amplifier has a transistor stage to amplify the signal.

All thereof are alternative embodiments serving both for turning on and turning off the means of illumination 2, and wherein the supply voltage varies in a progressive form.

An object of the present invention is also a vehicle headlamp comprising the illumination device according to that aforedescribed.

A yet further object of the present invention, as may be observed in figures 4A, 4B, 4C, 4D, 4E, 5, 6A, 6B, 6C and 6D, is a procedure to control the illumination of an illumination device for a vehicle, wherein the procedure comprises the stages of receiving an instruction to modify a state of illumination of the plurality of illumination means 2, and to modify a voltage supplied by the variable power source 5, such that each means of illumination 2 modifies the respective state of illumination thereof as a function of the value of the associated resistive means 3.

Additionally, as may be observed in figures 4A, 4B, 4C, 4D and 4E, the procedure for controlling an illumination of an illumination device for a vehicle comprises the stage of modifying the voltage supplied by the variable power source 5, comprising supplying a progressive increase in voltage between the terminals 6 of the variable power source 5 such that each means of illumination 2 turns on as a function of the value of the associated resistive means 3. An example would be the activation of an actuator of an indicator, the same sending the instruction to modify a state of illumination of the plurality of illumination means 2. In this manner there would be produced a progressive increase in voltage between the terminals 6 and a sequential turning on of the means of illumination 2.

Furthermore, as may be observed in figures 4A, 4B, 4C, 4D and 4E, the procedure to control an illumination of an illumination device for a vehicle comprises the stage of modifying the voltage supplied by the variable power source, comprising supplying a progressive decrease of voltage between the terminals 6 of the variable power source 5 such that each means of illumination 2 is turned off as a function of the value of the associated resistive means 3. An example would be the activation of an actuator of a brake, the same sending the instruction to modify a state of illumination of the plurality of illumination means 2. In this manner there would be produced a progressive decrease of voltage between the terminals 6 and a sequential turning off of the means of illumination 2.

An object also of the present invention is a computer program comprising instructions, when the program is executed by computer, to execute the procedure to control an illumination according to the procedure aforedescribed.

The details, the forms, the dimensions and other accessory elements, together with the components employed in the implementation of the illumination device for a vehicle and associated procedure to control said illumination, may be conveniently substituted by others being technically equivalent and not departing from the essentiality of the invention nor from the scope defined by the claims included following the list below.

### List of numerical references:

- 1: array
- 11: first dimension
- 12: second dimension
- 2: means of illumination
- 21: LED diode
- 3: resistive means
- 31: fixed resistance
- 4: condenser
- 5: variable power source
- 6: terminal

### List of text references:

- F41: Step 1: Condenser charge Tao = 2
- F42: Step 2: Condenser charge Tao = 2/3
- F43: Step 3: Condenser charge Tao = 3/4
- F44: Step 4: Condenser charge Tao = 5
- F45: Condenser discharge
- F51: Time constant in seconds

## Claims

1. Illumination device for a vehicle, wherein the illumination device comprises
- a variable power source (5),
- a plurality of illumination means (2), wherein the plurality of illumination means (2) are disposed in series, and wherein the plurality of illumination means (2) are disposed upon terminals (6) of the variable source of voltage (5),
**characterised in that** each of the means of illumination (2) has associated respectively a resistive means (3) disposed in parallel, such that each means of illumination (2) is illuminated as a function of the value of the associated resistive means (3).

2. Illumination device for a vehicle according to claim 1, **characterised in that** each means of illumination (2) comprises a single LED diode (21).

3. Illumination device for a vehicle according to claim 2, **characterised in that** the LED diode (21) of each means of illumination (2) comprises identical characteristics to the LED diode (21) of the plurality of illumination means (2).

4. Illumination device for a vehicle according to claim 1, **characterised in that** each means of illumination (2) comprises a plurality of LED diodes (21), wherein the plurality of LED diodes (21) are disposed in parallel.

5. Illumination device for a vehicle according to claim 4, **characterised in that** the plurality of LED diodes (21) of each means of illumination (2) comprises some characteristics identical to one another.

6. Illumination device for a vehicle according to claim 5, **characterised in that** the plurality of LED diodes (21) of each means of illumination (2) comprises identical characteristics to the plurality of LED diodes (21) of the plurality of illumination means (2).

7. Illumination device for a vehicle according to claim 1, **characterised in that** each resistive means (3) is a fixed resistance (31).

8. Illumination device for a vehicle according to claim 7, **characterised in that** each fixed resistance (31) comprises a value, wherein the value of each fixed resistance (31) differs from one to another.

9. Illumination device for a vehicle according to claim 8, **characterised in that** the value of each fixed resistance (31) is ordered in a sequenced manner, such that the value of each associated fixed resistance (31) in parallel to each means of illumination (2) is ordered from higher to lower or from lower to higher.

10. Illumination device for a vehicle according to claim 1, **characterised in that** each resistive means (3) is a variable resistance.

11. Illumination device for a vehicle according to claim 1, **characterised in that** the variable power source (5) comprises a continuous power source and at least one condenser (4), wherein the at least one condenser (4) is disposed in series in respect of the continuous power source.

12. Illumination device for a vehicle according to claim 1, **characterised in that** that the variable power source (5) comprises a pulsing power source and at least one condenser (4), wherein the at least one condenser (4) is disposed in series in respect of the pulsing power source.

13. Procedure to control an illumination of an illumination device for a vehicle according to claim 1, wherein the procedure comprises the steps of:
- receiving an instruction to modify a state of illumination of the plurality of illumination means (2), and
- modifying a voltage supplied by the variable power source (5), such that each means of illumination (2) modifies the respective state of illumination thereof as a function of the value of the associated resistive means (3).

14. Procedure to control an illumination of an illumination device for a vehicle according to claim 13, **characterised in that** the stage of modifying the voltage supplied by the variable power source (5) comprises supplying a progressive increase in voltage between the terminals (6) of the variable power source (5) such that each means of illumination (2) is turned on as a function of the value of the associated resistive means (3).

15. Procedure to control an illumination of an illumination device for a vehicle according to claim 13, **characterised in that** the stage of modifying the voltage supplied by the variable power source comprises supplying a progressive decrease in voltage between the terminals (6) of the variable power source (5) such that each means of illumination (2) is turned off as a function of the value of the associated resistive means (3).
